# EUROPÄISCHE PATENTSCHRIFT

(11) **EP 3 039 367 B1**
(45) Veröffentlichungstag und Bekanntmachung des Hinweises auf die Patenterteilung: **23.10.2019**
(21) Anmeldenummer: 14752786.5
(22) Anmeldetag: 14.08.2014
(51) Int. Cl.: F28D 9/00, B23K 1/00, F25J 5/00

(54) **VERFAHREN ZUR HERSTELLUNG EINES PLATTENWÄRMETAUSCHERS MIT MEHREREN DURCH LOTBESCHICHTETE TRÄGER VERBUNDENEN WÄRMETAUSCHERBLÖCKEN**
METHOD FOR MANUFACTURING A PLATE HEAT EXCHANGER WITH A PLURALITY OF HEAT EXCHANGER BLOCKS CONNECTED WITH SOLDER-COATED HOLDERS
PROCÉDÉ DE FABRICATION D'UN ÉCHANGEUR DE CHALEUR À PLAQUES AVEC PLUSIEURS BLOCS D'ÉCHANGEUR DE CHALEUR RELIÉS PAR DES SUPPORTS ÉTAMÉS

(30) Priorität: 29.08.2013 EP 13004273
(43) Veröffentlichungstag der Anmeldung: 06.07.2016
(73) Patentinhaber: Linde Aktiengesellschaft, 80331 München (DE)
(72) Erfinder: DIETRICH, Jörg, 83533 Erding (DE); HÖLZL, Reinhold, 82538 Geretsried (DE)
(86) Internationale Anmeldenummer: PCT/EP2014/002243
(87) Internationale Veröffentlichungsnummer: WO 2015/028125

(56) Entgegenhaltungen:
- EP-A1- 0 952 419
- WO-A2-2007/149345
- FR-A1- 2 793 548
- US-A1- 2012 152 507

## Beschreibung

Die Erfindung betrifft ein Verfahren zur Herstellung eines Plattenwärmetauschers mit zumindest zwei Wärmetauscherblöcken, wobei jeder Wärmetauscherblock mehrere parallel zueinander angeordnete Trennbleche aufweist, die eine Vielzahl von Wärmeaustauschpassagen für am Wärmetausch beteiligte Fluide bilden. Zudem betrifft die Anmeldung auch einen ebensolchen Plattenwärmetauscher, bei welchem die Wärmetauscherblöcke zumindest einen gemeinsamen Header zum Verteilen eines wärmeaustauschenden Fluids auf beide Wärmetauscherblöcke oder zum Abführen eines wärmeaustauschenden Fluids aus beiden Wärmetauscherblöcken aufweisen. US 2012/0152507 A1 offenbart ein Verfahren gemäss dem Oberbegriff des Patentanspruchs 1, sowie einen Plattenwärmetasucher gemäss dem Oberbegriff des Patentanspruchs 13.

Hartgelötete Plattenwärmetauscher aus Aluminium werden in zahlreichen Anlagen bei verschiedensten Drücken und Temperaturen eingesetzt. Sie finden beispielsweise Anwendung bei der Zerlegung von Luft, der Verflüssigung von Erdgas oder in Anlagen zur Herstellung von Ethylen.

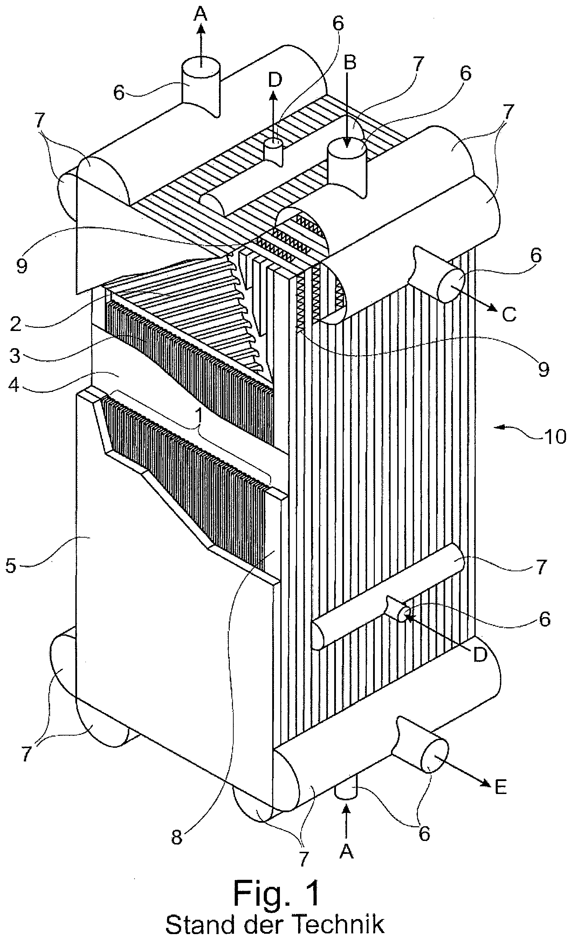

Ein derartiger Plattenwärmetauscher wird beispielsweise in "The standards of the brazed aluminium plate-fin heat exchanger manufactures association" ALPEMA, Third Edition, 2010 auf Seite 5 gezeigt und beschrieben. Eine daraus entnommene Abbildung ist in der Fig. 1 als Stand der Technik dargestellt und wird im Folgenden beschrieben.

Der dort gezeigte Plattenwärmetauscher umfasst mehrere parallel zueinander angeordnete Trennbleche 4, die eine Vielzahl von Wärmeaustauschpassagen 1 für die miteinander in Wärmeaustausch zu bringenden Medien bilden. Die Wärmeaustauschpassagen 1 sind durch bündig am Rand der Trennbleche 4 angebrachte Blechstreifen 8, im Weiteren auch als Sidebars 8 bezeichnet, nach außen abgeschlossen. Innerhalb der Wärmeaustauschpassagen 1 sind gewellte Bleche 3, sogenannte Fins 3, angeordnet. Die Trennbleche 4, Fins 3 und Sidebars 8 sind fest miteinander verbunden und bilden somit einen kompakten Wärmetauscherblock 10. Der gesamte Wärmetauscherblock 10 ist durch Deckbleche 5 nach außen begrenzt.

Zur Zu- und Abführung der wärmeaustauschenden Medien sind über Eintritts- und Austrittsöffnungen 9 der Wärmeaustauschpassagen 1 halbzylinderförmige Sammler 7 mit Stutzen 6 angebracht, die zum Anschluss von zu- und abführenden Rohrleitungen dienen. Die Sammler 7 werden im Folgenden auch als Header 7 bezeichnet. Die Ein- und Austrittsöffnungen 9 der Wärmeaustauscherpassagen 1 sind durch sogenannte Verteilerlamellen bzw. Verteilerfins 2 gebildet, die für eine gleichmäßige Verteilung der Medien innerhalb der einzelnen Wärmeaustauschpassagen 1 sorgen. Die Medien strömen in den durch die Fins 3 und die Trennbleche 4 gebildeten Kanälen durch die Wärmeaustauschpassagen 1.

Die Fins 3 sind an ihren Kontaktstellen mit den Trennblechen 4 verlötet, wodurch ein intensiver Wärmeleitkontakt zwischen den Fins 3 und den Trennblechen 4 hergestellt ist. Dadurch wird der Wärmeaustausch zwischen den verschiedenen Medien verbessert, die alternierend in benachbarten Wärmeaustauschpassagen 1 strömen.

Derartige Plattenwärmetauscher sind vorzugsweise aus Aluminium gebildet, wobei die Bauteile durch Hartlöten miteinander verbunden werden. Als Material kann jedoch auch Edelstahl verwendet werden. Die mit Lot versehenen Fins, Trennbleche, Verteilerfins, Deckbleche und Sidebars werden aufeinander gestapelt und anschließend in einem Ofen zu einem Wärmetauscherblock hartgelötet. Auf den Wärmetauscherblock werden anschließend die Header mit Stutzen aufgeschweißt.

Durch das eben beschriebene Herstellungsverfahren wird durch die Größe und Geometrie des Lötofens auch die maximale Größe eines derartigen Wärmetauscherblocks vorgegeben. Oft verlangen jedoch Prozesse eine größere Wärmeaustauschfläche und somit größere Wärmetauscherblöcke als in einem derartigen Ofen gefertigt werden können. Um diesen Anforderungen gerecht zu werden, wird auf Seite 6 unter 1.2.3 der vorgenannten Veröffentlichung vorschlagen, zwei oder mehrere Wärmetauscherblöcke durch Schweißen miteinander zu verbinden, um damit einen zusammengesetzten Wärmetauscherblock mit erhöhter Stapelhöhe zu erhalten.

Um einen Plattenwärmetauscher mit mehreren Wärmetauscherblöcken herzustellen, werden zunächst zwei oder mehrere Wärmetauscherblöcke separat voneinander aus Trennblechen, Fins und Verteilerfins wie oben beschrieben in einem Lötofen gefertigt.

Die Wärmetauscherblöcke können daher bei heute üblichen Lötofengrößen maximal eine Länge von etwa 8,2m, eine Breite von etwa 1,5m und eine Höhe von etwa 3,0m aufweisen. Diese weisen noch keine Header auf. Auf das Deckblech eines ersten Wärmetauscherblocks werden entlang der Kanten des Deckbleches Leisten aufgeschweißt, die bündig mit den Kanten des Deckblechs abschließen. Diese häufig auch als Sidebars bezeichneten Leisten bilden somit quasi einen Rahmen auf dem Deckblech. Ein zweiter Wärmetauscherblock, der mit dem ersten Wärmetauschblock verbunden werden soll, wird mit seinem Deckblech auf die Leisten des ersten Wärmetauscherblocks aufgelegt und mit diesen verschweißt. Die Anordnung aus beiden verbundenen Wärmetauscherblöcken weist eine größere Stapelhöhe auf als die einzelnen Wärmetauscherblöcke, welche damit die Größe und Geometrie des Lötofens übersteigt. Auf diese Weise können beliebig viele Wärmetauscherblöcke miteinander zu einer beliebig großen Wärmetauscherblockanordnung verbunden werden. Anschließend wird die entstandene Wärmetauscherblockanordnung mit Headern und Stutzen versehen, um einen großen Plattenwärmeaustauscher zu erhalten, der mehrere miteinander verbundene Wärmetauscherblöcke umfasst.

Zwischen den Deckblechen zweier benachbarter Wärmetauscherblöcke eines derartigen Plattenwärmetauschers befindet sich ein von den Sidebars umgebener Hohlraum, der mit Luft gefüllt ist. Dieser Hohlraum wird nicht von einem der am Wärmetausch beteiligten Medien durchströmt. Er ist nicht mit Druck beaufschlagt.

In verschiedensten Anwendungen treten bei derartigen Plattenwärmetauschern aus mehreren Wärmetauscherblöcken hohe Spannungskonzentrationen im Übergangsbereich der Wärmetauscherblöcke auf.

Der vorliegenden Erfindung liegt die Aufgabe zugrunde, ein Verfahren zur Herstellung eines Plattenwärmetauschers umfassend mehrere Wärmetauscherblöcke und einen derartigen Plattenwärmetauscher bereitzustellen, welcher eine möglichst große mechanische Festigkeit aufweist, bei welchem jedoch Spannungen im Übergangsbereich der Wärmetauscherblöcke reduziert sind.

Die gestellte Aufgabe wird durch ein Verfahren mit den Merkmalen des unabhängigen Anspruchs 1 und durch einen Plattenwärmetauscher nach Anspruch 13 gelöst. Die jeweils abhängigen Ansprüche beziehen sich auf bevorzugte Ausführungsformen.

Demnach wird ein Verfahren zur Herstellung eines Plattenwärmetauschers mit zumindest zwei Wärmetauscherblöcken bereitgestellt, die separat voneinander in einem Lötofen gefertigt werden, wobei jeder Wärmetauscherblock mehrere parallel zueinander angeordnete Trennbleche aufweist, die eine Vielzahl von Wärmeaustauschpassagen für am Wärmetausch beteiligte Fluide bilden. Erfindungsgemäß wird bei dem Verfahren, nachfolgend zur separaten Fertigung der Wärmetauscherblöcke in dem Lötofen, zumindest ein mit Lot versehener Träger zum Schmelzen des Lotes erwärmt, der Träger zwischen gegenüberliegenden Außenflächen zu verbindender Wärmetauscherblöcke angeordnet und die zu verbindenden Wärmetauscherblöcke derart aufeinander oder aneinandergesetzt, dass der zumindest eine Träger zwischen gegenüberliegenden Außenflächen der zu verbindenden Wärmetauscherblöcke festgelegt wird, d.h. der Träger wird zwischen den beiden Außenflächen der Wärmetauscherblöcke fixiert. Nach Erhärten des Lotes sind die Außenflächen der Wärmetauscherblöcke stoffschlüssig und kraftschlüssig miteinander über den zumindest einen Träger und das erhärtete Lot verbunden. Der Träger kann bereits vor Erwärmen zwischen den zu verbindenden Außenflächen beabstandet von diesen angeordnet sein, um den Träger nach Erwärmung zeit- und wegnah zwischen den Außenflächen fixieren zu können. Der erwärmte Träger kann jedoch auch erst kurz vor Aneinanderlegen oder Aufeinanderlegen der Wärmetauscherblöcke zwischen den Außenflächen platziert werden. Es besteht auch die Möglichkeit, den erwärmten Träger zunächst an die Außenfläche eines Wärmetauscherblocks anzulegen, bevor der weitere Wärmetauscherblock an den Träger angelegt oder aufgelegt wird.

Die vorliegende Erfindung umfasst auch einen Plattenwärmetauscher mit zumindest zwei Wärmetauscherblöcken, wobei jeder Wärmetauscherblock mehrere parallel zueinander angeordnete Trennbleche aufweist, die eine Vielzahl von Wärmeaustauschpassagen für am Wärmetausch beteiligte Fluide bilden, und wobei die Wärmetauscherblöcke nach außen durch Deckbleche begrenzt sind und zumindest einen gemeinsamen Header zum Verteilen eines wärmeaustauschenden Fluids auf beide Wärmetauscherblöcke oder zum Abführen eines wärmeaustauschenden Fluids aus beiden Wärmetauscherblöcken aufweisen. Erfindungsgemäß sind die Wärmetauscherblöcke jeweils an gegenüberliegenden Deckblechen durch mindestens einen flachen Träger verbunden, der über Lot mit den Deckblechen der Wärmtauscherblöcke verbunden ist. Die Deckbleche weisen in der Regel eine größere Materialdicke auf als die innerhalb der Wärmetauscherblöcke befindlichen Trennbleche.

Die erfindungsgemäße Verbindung der Außenflächen bzw. der Deckbleche der Wärmetauscherblöcke über den zumindest einen mit Lot versehenen Träger gewährleistet eine deutlich flächigere Verbindung als es im Stand der Technik der Fall ist. Die Außenflächen der Wärmetauscherblöcke, die in der Regel durch die Deckbleche der Wärmetauscherblöcke gebildet sind, sind durch den zumindest einen mit Lot befestigten Träger wärmeleitend miteinander verbunden. Durch die Wärmeleitung ist ein Ausgleich von Temperaturunterschieden zwischen den benachbarten Wärmetauscherblöcken möglich, wodurch temperaturinduzierte Spannungen zwischen den Wärmetauscherblöcken im Verbindungsbereich der Wärmetauscherblöcke reduziert sind. Über die Träger-Lot-Verbindung zwischen den Wärmetauscherblöcken wird eine kraftschlüssige Verbindung bis ins Zentrum der gegenüberliegenden Außenflächen geschaffen, wodurch die mechanische Festigkeit der Wärmetauscherblockverbindung verbessert wird. Hierdurch wird die Betriebssicherheit und Ausfallsicherheit bzw. die Lebensdauer des Plattenwärmetauschers deutlich erhöht.

Bei einem Plattenwärmetauscher aus mehreren Wärmetauscherblöcken nach dem Stand der Technik sind hingegen die gegenüberliegenden Außenflächen bzw. Deckbleche zweier benachbarter Wärmetauscherblöcke nur an den jeweiligen Kanten der Außenflächen über die randbündigen Leisten miteinander verbunden. Damit weist ein Plattenwärmetauscher nach dem Stand der Technik keine Verbindungen im Zentrum der gegenüberliegenden Außenflächen auf. Entsprechend ist der thermische Kontakt zwischen zwei Wärmetauscherblöcken aufgrund des luftgefüllten Hohlraumes deutlich schlechter als der thermische Kontakt zwischen den Wärmeaustauschpassagen innerhalb eines Wärmeaustauschblocks. Hierdurch treten an der Außenrandschweißnaht an einzelnen lokalen Stellen temperaturinduzierte Klemmspannungen auf. Dies kann in verschiedensten Anwendungen zu hohen thermischen Spannungen innerhalb des Plattenwärmetauschers am Übergang der Wärmetauscherblöcke führen. Mit der erfindungsgemäßen Träger-Lot-Verbindung wird dies verhindert.

Vorzugsweise besteht der zumindest eine Träger aus Metall, beispielsweise in Form von Metallblech oder einer Anordnung von Metalldrähten. Die bevorzugte Dicke des zumindest einen Trägers liegt zwischen etwa 0,4 mm und etwa 50 mm.

Besonders bevorzugt weist der zumindest eine Träger eine Flächenausdehung auf, die zumindest den zu verbindenden Außenflächen der Wärmetauscherblöcke entspricht. Hierzu sei angemerkt, dass die zu verbindenden Außenflächen der Wärmetauscherblöcke in der Regel die gleichen Längen und Breiten und somit auch in etwa die gleichen Flächeninhalte aufweisen. Durch einen vollflächigen Träger können die Wärmetauscherblöcke über ihre gesamten Außenflächen miteinander verbunden werden, wodurch eine sehr stabile mechanische Verbindung der beiden Flächen miteinander geschaffen wird. Hierdurch werden Kerbwirkungen vermieden, wie sie bei rein lokalen Verbindungen der Außenflächen bei ausschließlich an Kanten der Wärmetauscherblöcke umlaufenden äußeren Schweißnähten bisher auftraten.

Neben einer vollflächigen Ausbildung der Träger, besteht auch die Möglichkeit den Träger derart auszubilden, dass dieser nur eine Teilfläche der Außenflächen der Wärmetauscherblöcke abdeckt. Falls dies der Fall ist, werden bevorzugt mehrere teilflächige Träger, beispielsweise in Form von Streifen nebeneinander angeordnet. Die Streifen können beabstandet voneinander sein. Bevorzugt werden diese jedoch in etwa Stoß an Stoß nebeneinander angeordnet. In einer bevorzugten Ausführungsform füllen demnach der oder die Träger die gegenüberliegenden Außenflächen der Wärmetauscherblöcke in etwa vollständig aus. Damit besteht über die gesamten Außenflächen der Wärmetauscherblöcke wärmeleitender Kontakt, wodurch ein Temperaturausgleich zwischen den Wärmetauscherblöcken optimal stattfinden kann. Es besteht jedoch, wie vorstehend dargestellt, auch die Möglichkeit nur Teilbereiche des Zwischenraumes mit den lotbeschichteten Trägern zu versehen. Vorzugsweise reichen die lotbeschichteten Träger jedoch bis in das Zentrum der gegenüberliegenden Außenflächen der Wärmetauscherblöcke.

Zum Ausgleich von Unebenenheiten der Außenflächen der Wärmtauscherblöcke können mehrere Träger, insbesondere Metallbleche, vorzugsweise zwei bis vier, parallel zueinander, d.h. in einem Stapel, zwischen den Außenflächen der zu verbindenen Wärmetauscherblöcke angeordnet werden, wobei die Träger jeweils in etwa Flächen aufweisen, die denjenigen der Außenflächen, der zu verbindenen Wärmetauscherblöcke entsprechen. Das an den Trägern befindliche Lot kann während des Verbindens der Wärmetauscherblöcke unterschiedliche Lotschichtdicken ausbilden und damit vorhandene Unebenheiten innerhalb der Außenflächen und im Spalt zwischen den zu verbindenden Außenflächen ausgleichen.

Der zumindest eine Träger kann auf einer oder auf beiden Seiten, die den Außenflächen der Wärmetauscherblöcke zugewandt werden, mit Lot versehen sein. Im Falle von Metallblechen sind diese vorzugsweise von beiden Seiten mit einer durchgehenden Lotschicht versehen. Falls eine Anordnung von Metalldrähten als Träger verwendet wird, sind die Drähte vorzugsweise vollständig von Lot ummantelt. Wenn beispielsweise mehrere Metallbleche in Form eines Stapels zwischen den Außenflächen der Wärmetauscherblöcke angeordnet werden, können einzelne Träger auch nur einseitig mit Lot versehen sein.

Vorzugsweise ist der zumindest eine Träger mit einer Lotschicht beschichtet, die vorzugsweise nicht abhebbar auf dem Träger aufgebracht ist. Diese Lotschicht kann beispielsweise durch Plattieren, Sprühen oder Tauchen ausgebildet werden. Lotschichtdicken zwischen etwa 0,7 mm und etwa 0,17 mm sind bevorzugt. Es können auch mehrere Schichten von Lot in einer sog. Mehrfachlotplattierung übereinander aufgebracht sein. Dies ist besonders vorteilhaft, wenn Unebenheiten auf den Außenflächen der zu verbindenen Wärmetauscherblöcke ausgeglichen werden sollen. Die Verbindung von Trägerwerkstoff und Lotwerkstoff kann jedoch auch durch eine Klebeschicht ausgebildet sein. Möglich ist auch, die Lotschicht beispielsweise in Form einer Folie vor dem Erwärmen des Trägers lose auf den Träger aufzulegen. Als Träger werden besonders bevorzugt lotplattierte Metallbleche nach Europäischem Standard EN-AW 3003 oder EN-AW 5083 mit einer AlSi10Mg Lotplattierung verwendet.

Vorzugsweise sind die Wärmetauscherblöcke des Plattenwärmetauschers über eine Drahtgitter-Lot-Verbindung miteinander verbunden. Eine bevorzugte Ausführungsform des erfindungsgemäßen Verfahrens bzw. des Plattenwärmetauschers sieht vor, mindestens einen ersten Träger, der mehrere parallel in einer ersten Ebene zueinander angeordnete, erste lotbeschichteten Drahtstäbe aufweist, und mindestens ein zweiten Träger vorzusehen, der ebenfalls mehrere parallel in einer zweiten Ebene zueinander angeordnete zweite, lotbeschichtete Drahtstäbe aufweist, wobei der erste Träger und der zweite Träger derart zueinander angeordnet werden, dass die erste Ebene und die zweite Ebene parallel zueinander und die ersten Drahtstäbe und die zweiten Drahtstäbe winklig zueinander angeordnet sind, wobei die ersten und zweiten Drahtstäbe vorzugsweise einen Winkel von etwa 90° miteinander einschließen. Die Drähte weisen vorzugsweise eine Dicke im Bereich von etwa 0,2 mm bis etwa 5 mm auf.

Es gibt verschiedene Möglichkeiten den Träger zum Schmelzen des Lotes zu erwärmen: Der oder die Träger können im Sinne einer Widerstandsheizung durch Anlegen einer elektrischen Spannung erwärmt werden. Alternativ hierzu kann ein Erwärmen des oder der Träger auch durch ein Induktionsmittel, wie eine Induktionsspule erfolgen. Das Wirkungsprinzip der Induktionserwärmung besteht darin, dass beispielsweise eine ein- oder mehrwindige Arbeitsspule (Induktor) von einem Wechselstrom durchflossen wird. Dieser Induktor baut in seiner Umgebung ein elektromagnetisches Wechselfeld auf. Wird in dieses elektromagnetische Wechselfeld der mindestens eine Träger gebracht, dann wird in diesen eine Spannung induziert, welche einen Wechselstrom erzeugt. Nach dem Joulschen Gesetz wird dann als Resultat in dem stromdurchflossenen Oberflächenbereich des Trägers Wärme erzeugt. Durch die in den Träger induzierte Wärme und ggf. durch die Erwärmung des Lotes selbst, wird das Lot zum Schmelzen gebracht.

Sobald der Träger die Schmelztemperatur des Lotes erreicht hat, wird vorzugsweise eine weitere Wärmeerzeugung sofort gestoppt und vorzugsweise direkt anschließend die Wärmetauscherblöcke aufeinandergesetzt bzw. aneinander gesetzt. Das Einbringen einer zu großen Wärmemenge in die Verbindung zwischen den Wärmetauscherblöcken sollte vermieden werden, um das innerhalb der Wärmetauscherblöcke verwendete Lot nicht aufzuschmelzen oder keine Temperaturspannungen in die Wärmetauscherblöcke zu induzieren. Vorzugsweise weist das Trägerlot, mit welchem der Träger oder die Träger versehen sind, einen niedrigeren Schmelzpunkt auf als das Bauteillot, mit welchem Bauteile innerhalb der Wärmetauscherblöcke verbunden sind. Damit wird vermieden, dass beim Zusammenfügen der Wärmetauscherblöcke das Bauteillot durch die eingebrachte Wärme aufgeschmolzen wird.

Die Wärmetauscherblöcke können nach Erwärmen des Trägers und Schmelzen des Lotes aufeinandergesetzt werden, indem ein Wärmetauscherblock auf einen anderen Wärmetauscherblock aufgelegt wird. Durch die Gewichtskraft des oberen Wärmetauscherblocks wird der Träger mit dem Lot zwischen den Außenflächen fixiert.

Teile des Trägers bzw. der Träger, die seitlich über die Abmessungen der Außenflächen der miteinander verbundenen Wärmetauscherblöcke hinausragen, können nach dem Zusammenfügen der Wärmetauscherblöcke abgetrennt werden. Vorzugsweise werden im Anschluss daran Header und Stutzen an den Wärmetauscherblöcken angebracht, worunter auch zumindest ein gemeinsamer Header ist, der jeweils an zumindest zwei Wärmetauscherblöcken angeschlossen ist.

Der erfindungsgemäße Plattenwärmetauscher weist in den Wärmeaustauschpassagen der Wärmetauscherblöcke vorzugsweise Mittel zur Unterteilung der Wärmeaustauschpassagen in eine Vielzahl von Kanälen auf. Vorzugsweise sind dies gewellte Bleche, die verschiedene, dem Fachmann bekannte Ausbildungen aufweisen können. Sie dienen dazu, die Wärmeleitung zwischen den Wärmeaustauschpassagen zu erhöhen und die Fluide gleichmäßig über die Wärmeaustauschpassagen zu verteilen. Zudem erhöhen sie die mechanische Festigkeit des Wärmetauscherblocks.

Bei einem Plattenwärmetauscher gemäß der vorliegenden Erfindung wird die mechanische und thermische Verbindung zwischen zwei benachbarten Wärmetauscherblöcken deutlich gegenüber dem Stand der Technik verbessert. Der gesamte, aus mehreren Wärmetauscherblöcken bestehende Plattenwärmetauscher ist ein deutlich starreres und mechanisch stabileres Gebilde, als ein Plattenwärmetauscher nach dem Stand der Technik. Zusätzlich weist ein erfindungsgemäßer Plattenwärmetauscher einen deutlich besseren Temperaturausgleich zwischen zwei benachbarten Wärmetauscherblöcken auf. Im Rahmen der vorliegenden Erfindung können Plattenwärmetauscher bereitgestellt werden, die zwei oder mehr als zwei, vorzugsweise jedoch zwei bis fünf, Wärmetauscherblöcke umfassen. Da die mechanische Festigkeit der Verbindung zwischen den einzelnen Wärmetauscherblöcken gegenüber dem Stand der Technik erhöht ist, können auch Plattenwärmetauscher realisiert werden, die aus einer größeren Anzahl an Blöcken bestehen, als bisher üblich war und realisierbar erschien.

Der erfindungsgemäße Plattenwärmetauscher kann besonders vorteilhaft für Verfahren eingesetzt werden, die einen besonders intensiven Wärmekontakt zwischen den Außenflächen benachbarter Wärmetauscherblöcke erfordern. Dies ist beispielsweise der Fall bei steilen Temperaturgradienten, starken Änderungen im Temperaturgradienten oder bei Ungleichverteilungen der am Wärmeaustausch teilnehmenden Fluide (Fehlverteilung oder Maldistribution). Derartige Zustände können oft bei bestimmten Verdampfungsvorgängen von zweiphasigen Gemischen oder Reinstoffen, bei asymmetrischer Passagenanordnung, nicht spezifizierten Betriebszuständen, Abschalt- oder Anfahrvorgängen auftreten.

Im Folgenden soll die Erfindung anhand des in den Figuren 2 bis 4 dargestellten Ausführungsbeispiels der Erfindung näher erläutert werden.

Es zeigt:
- Fig. 2: eine perspektivische Ansicht zweier Wärmetauscherblöcke, die über ein Metalldrahtgitter miteinander verbunden werden;
- Fig. 3: eine perspektivische Ansicht zweier Wärmetauscherblöcke, die über zwei lotplattierte Bleche miteinander verbunden werden;
- Fig. 4: einen Plattenwärmetauscher mit den in Fig. 2 oder 3 verbundenen Wärmetauscherblöcken.

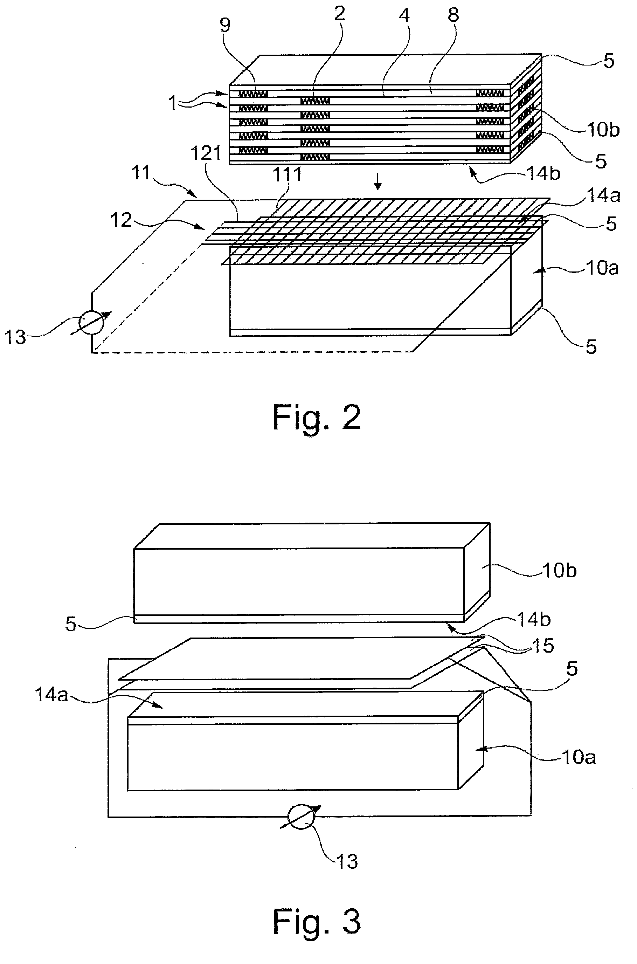

Fig. 2 zeigt zwei Wärmetauscherblöcke 10a und 10b. Der Aufbau des Wärmetauscherblocks 10a ist detaillierter dargestellt als derjenige von Block 10b. Sie weisen jedoch beide den gleichen Aufbau auf. Die Wärmetauscherblöcke 10a und 10b umfassen wie auch der in Fig. 1 dargestellte Block 10 eine Vielzahl von ebenen Blechen 4, im Weiteren auch als Trennbleche 4 bezeichnet, die in einem Stapel parallel und mit Abstand zueinander angeordnet sind. Auf den Trennblechen 4 sind jeweils bündig an deren Außenkanten Blechstreifen 8 angeordnet, die den Abstand zwischen den Trennblechen 4 festlegen und im Weiteren auch als Sidebars 8 bezeichnet werden. Durch diesen Aufbau sind zwischen den Trennblechen 4 eine Vielzahl von Wärmeaustauschpassagen 1 gebildet, die für einen indirekten Wärmetausch von zwei oder mehr Fluiden zur Verfügung stehen. Durch die Sidebars 8 sind die Wärmeaustauschpassagen 1 nach außen abgeschlossen.

Innerhalb der Wärmeaustauschpassagen 1 sind gewellte Bleche 3, sogenannte Fins 3, angeordnet. Diese sind in Fig. 3 nicht ersichtlich, da sie sich innerhalb des Wärmeaustauschblöcke 10a und 10b befinden. Es wird daher auf Fig. 1 verwiesen, die im Aufriss des Wärmeaustauschblockes 10 Fins 3 zeigt. An Ein- und Austrittsöffnungen 9 der Wärmeaustauscherpassagen 1 befinden sich sogenannte Verteilerlamellen bzw. Verteilerfins 2, die für eine gleichmäßige Verteilung der Fluide über die Strömungsquerschnitte der einzelnen Wärmeaustauschpassagen 1 sorgen. Die beiden Wärmetauscherblöcke 10a und 10b sind jeweils - in der dargestellten Ansicht - nach oben und unten durch Deckbleche 5 nach außen begrenzt. Die Deckbleche 5 weisen in der Regel eine größere Materialdicke auf als die innerhalb der Wärmetauscherblöcke 10a und 10b befindlichen Trennbleche 4. Als Material für die genannten Bauteile der Wärmetauscherblöcke 10a und 10b wird eine Aluminiumlegierung verwendet, beispielsweise Aluminiumlegierung 3003 oder 5083.

Zur Herstellung der Wärmetauscherblöcke 10a und 10b werden die lotplattierten Trennbleche 4, die Fins 3, die Verteilerfins 2 und die Sidebars 8, zunächst abwechselnd aufeinander gestapelt. Anschließend wird die Anordnung in einem Lötofen hartgelötet. Nach dem Löten sind alle genannten Bauteile fest miteinander verbunden und bilden somit kompakte quaderförmige Wärmetauscherblöcke 10a und 10 b. Die beiden Wärmetauscherblöcke 10a und 10b werden getrennt voneinander gelötet. Sie besitzen beide Abmessungen, die für einen üblichen Lötofeninnenraum maximale Abmessungen darstellen. Falls für bestimmte Anlagen und Prozesse größere Wärmeaustauschflächen benötigt werden, als ein Wärmetauscherblock maximal möglicher Lötofengröße zur Verfügung stellen kann, werden gemäß der vorliegenden Erfindung zwei oder mehrere Wärmetauscherblöcke miteinander verbunden.

Die Fig. 2 und 3 zeigen alternative Verfahren zur Verbindung der Wärmetauscherblöcke 10a und 10b. Zunächst wird auf Fig. 2 Bezug genommen.

Gemäß Fig. 2 werden nachfolgend zu der vorstehend beschriebenen separaten Fertigung der Wärmetauscherblöcke 10a und 10b zwischen Deckblechen 5 der zu verbindenen Wärmetauscherblöcke 10a und 10b zwei flache Drahtanordnungen 11 und 12 angeordnet. Die erste Drahtanordnung 11 weist mehrere parallel in einer ersten Ebene zueinander angeordnete, lotbeschichtete, erste Drahtstäbe 111 auf, die in paralleler Schaltung mit einer elektrischen Spannungsquelle 13 verbunden sind. Die zweite Drahtanordnung 12 weist ebenfalls mehrere parallel in einer zweiten Ebene zueinander angeordnete, zweite lotbeschichtete Drahtstäbe 121 auf, die ebenfalls in paralleler Schaltung mit der Spannungsquelle 13 verbunden sind. Die Drahtstäbe 111 und 121 sind mit einem Lot ummantelt, das eine geringere Schmelztemperatur aufweist als das Lot, mit welchem die Bauteile der Wärmetauscherblöcke 10a und 10b miteinander verbunden sind. Die Drahtstäbe besitzen vorzugsweise einen Durchmesser in einem Bereich von etwa 0,2 mm bis etwa 5 mm. Die Abstände zwischen den Drahtstäben betragen vorzugsweise etwa 5 mm bis etwa 50 mm.

Über die Spannungsquelle 13 wird jeweils eine elektrische Spannung an die Drahtstäbe 111 und 121 angelegt, wodurch ein Strom durch die Drahtstäbe 111 und 121 fließt. Dieser bewirkt durch den Widerstand der Metalldrähte bedingt, ein Erwärmen der Metalldrähte 111 und 121. Die erwärmten Metalldrähte 111 und 121 bewirken ein Schmelzen des aufgebrachten Lotes. Sobald die Metalldrähte 111 und 121 die Schmelztemperatur des Lotes erreicht haben, werden die Verbindungen zur Spannungsquelle 13 unterbrochen, die vorher räumlich voneinander beabstandeten Drahtanordnungen 11 und 12 auf den unteren Wärmetauscherblock 10a aufgelegt und der obere Wärmetauscherblock 10b fluchtend auf den unteren Wärmetauscherblock 10a aufgelegt. Dies ist für die nachfolgende Aufbringung von gemeinsamen Headern auf die beiden Wärmetauscherblöcke 10a und 10b von Bedeutung. Dabei werden die Drahtanordnungen 11 und 12 zwischen den gegenüberliegenden Außenflächen 14a und 14b der Wärmetauscherblöcke 10a und 10b festgelegt. Nach dem Erkalten und damit Erhärten des Lotes sind beide Wärmetauscherblöcke 10a und 10b stoff- und kraftschlüssig über die Drahtanorndungen 11 und 12 und das erhärtete Lot verbunden. Die ersten Drahtstäbe 111 und die zweiten Drahtstäbe 112 schließen einen Winkel von etwa 90° miteinander ein, wodurch ein Drahtgitter gebildet ist.

Die über die Abmessungen der Außenflächen 14a und 14b hinausstehenden Drahtstäbe 111 und 112 werden anschließend abgetrennt. Mithilfe der dargestellten Verbindungsmethode können beliebig viele Wärmetauscherblöcke 10a und 10b miteinander zu einer beliebig großen Wärmetauscherblockanordnung mit erhöhter Wärmeaustauschfläche verbunden werden. Die lotbefestigten Metalldrahtstäbe 111 und 121 bilden zusammen mit dem Lot eine Wärmebrücke zwischen den Deckblechen 5 der Wärmetauscherblöche 10a und 10b, wodurch ein thermisch leitender Kontakt zwischen den gegenüberliegenden Deckblechen 5 der Wärmetauscherblöcke 10a und 10b gebildet ist. Durch die thermisch leitende Verbindung ist ein über die Ausdehung der Deckblechfläche sich erstreckender wärmeleitender Kontakt zwischen den Wärmetauscherblöcken 10a und 10b geschaffen. Temperaturunterschiede zwischen den Blöcken 10a und 10b können somit abgebaut werden, wodurch temperaturinduzierte Spannungen vermindert werden.

Zudem sind die beiden Wärmetauscherblöcke 10a und 10b durch das lotbefestigte Metalldrahtgitter stoffschlüssig über die gesamte Ausdehung der Außenflächen 14a und 14b, also auch im Zentrum der Außenflächen 14a und 14b, miteinander verbunden, wodurch die mechanische Festigkeit der Wärmetauscherblockverbindung gegenüber einer bisher nur am Rand bestehenden Schweißverbindung verbessert ist.

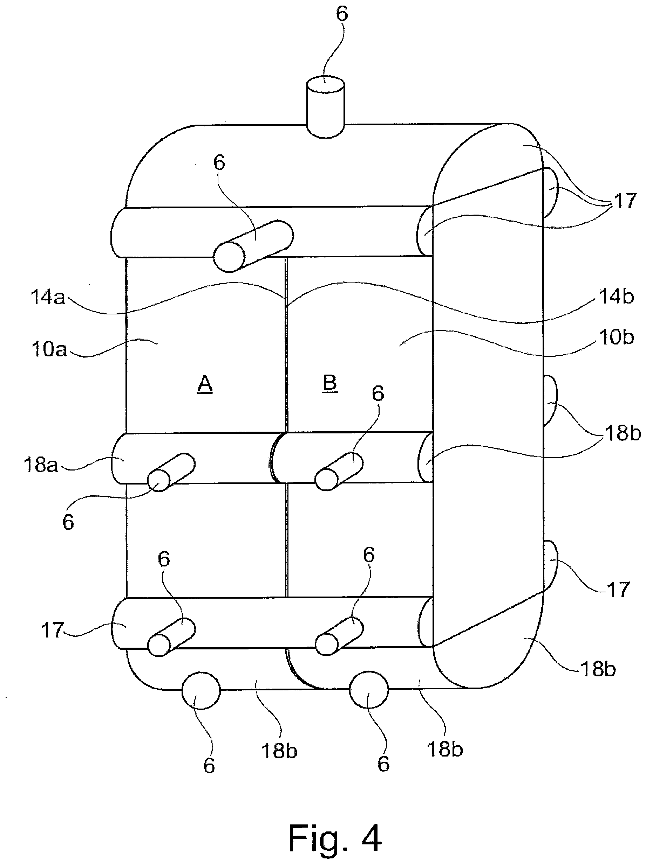

Wie in Fig. 4 dargestellt, werden nach dem Verbinden der beiden Wärmetauscherblöcke 10a und 10b gemeinsame Header 17, separate Header 18a und 18b mit Stutzen 6 auf die Wärmetauscherblöcke 10 und 10b durch Schweißen aufgebracht. Diese dienen dem Verteilen bzw. Sammeln der am Wärmeaustausch beteiligten Fluide. Fig. 4 zeigt eine mögliche Ausführungsform eines erfindungsgemäßen Plattenwärmetauschers.

Alternativ zu der in Fig. 2 dargestellten Verbindungsmethode können die Wärmetauscherblöcke 10a und 10b auch über ein oder mehrere, hier zwei, lotplattierte Metallbleche 15 miteinander verbunden werden. Hierfür sind Metallbleche auf beiden Seiten vollflächig mit einer Lotschicht plattiert. Als Träger wird besonders bevorzugt lotplattierte Metallbleche nach Europäischem Standard EN-AW 3003 oder EN-AW 5083 mit einer AlSi10Mg Lotplattierung verwendet.

Die lotplattierten Metallbleche 15 werden zunächst räumlich getrennt voneinander angeordnet und an eine Spannungsquelle 13 angeschlossen. Durch den Widerstand, den die Metallbleche 15 bilden, werden diese aufgeheizt. Sobald die lotplattierten Metallbleche 15 die Schmelztemperatur des Lotes erreicht haben, werden sie von der Spannungsquelle 13 getrennt, auf den unteren Wärmetauscherblock 10a aufgelegt und der obere Wärmetauscherblock 10b fluchtend aufgelegt. Die Metallbleche 15 weisen jeweils Flächen auf, die in etwa den zu verbindenden Außenflächen 14a und 14b der Wärmetauscherblöcke 10a und 10b entsprechen. Falls Teile die Metallbleche 15 nach dem Verbinden der Wärmetauscherblöcke 10a und 10b über die Außenflächen 14a und 14 b überstehen, werden diese Teile nach dem vollständigen Erhärten des Lotes abgetrennt.

Durch die Verwendung von zwei lotplattierten Metallblechen 15 können Unebenheiten auf den Außenflächen 14a und 14b besser ausgeglichen werden, da die drei flüssigen Lotschichten zwischen den beiden Metallblechen 15 und den jeweiligen Außenflächen 14a und 14b der Wärmetauscherblöcke 10a und 10b während des Zusammenfügens der Wärmetaucherblöcke 10a und 10b unterschiedliche Dicken ausbilden können. Abweichend von der dargestellten Ausführungsform sind auch Verbindungen mit einem einzigen Metallblech 15 möglich. Dies kann beispielsweise mit einer Mehrfachplattierung versehen sein, um ebenfalls Unebenheiten auf den Außenflächen 14a und 14b gut ausgleichen zu können.

Die lotplattierten Metallbleche 15 bilden eine vollflächige, stoffschlüssige Verbindung zwischen den Deckblechen 5 der Wärmetauscherblöcke 10a und 10b, wodurch ein optimaler thermisch leitender Kontakt zwischen den gegenüberliegenden Deckblechen 5 der Wärmetauscherblöcke 10a und 10b gebildet ist. Zudem resultiert aus der vollflächigen Verbindung eine hohe mechanische Festigkeit.

Abweichend von den in den Figuren dargestellten Ausführungsformen können auch andersartig geformte flache Metallträger verwendet werden. Das Erwärmen der Träger kann auch durch ein Induktionsmittel, wie eine Induktionsspule, erfolgen. Generell ist auch denkbar, den Träger durch andere Wärmequellen, wie Strahlungswärme, Konvektionswärme oder ähnlichem zu erwärmen. Ziel ist eine gleichmäßige Erwärmung des Trägers um ein gleichmäßiges und zeitgleiches Schmelzen des Lotes über die gesamte Ausdehnung des Trägers zu erreichen.

Wie in Fig. 4 dargestellt, werden nach dem Verbinden der beiden Wärmetauscherblöcke 10a und 10 b gemeinsame Header 17, separate Header 18a und 18b mit Stutzen 6 auf die Wärmetauscherblöcke 10 und 10b durch Schweißen aufgebracht. Diese dienen zum Verteilen bzw. Sammeln der am Wärmeaustausch beteiligten Fluide.

**Bezugszeichenliste**

| | |
|---|---|
| Wärmeaustauschpassage | 1 |
| Verteilerfin | 2 |
| Lamelle, Fin | 3 |
| Trennblech | 4 |
| Deckblech | 5 |
| Stutzen | 6 |
| Sammler, Header | 7 |
| Sidebar | 8 |
| Ein- oder Austrittsöffnung | 9 |
| Wärmetauscherblock | 10, 10a, 10b |
| erste Drahtanordnung | 11 |
| erste Drahtstäbe | 111 |
| zweite Drahtanordnung | 12 |
| zweite Drahtstäbe | 121 |
| Spannungsquelle | 13 |
| Außenfläche | 14a, 14b |
| lotplattiertes Metallblech | 15 |
| Gemeinsamer Header | 17 |
| Separater Header | 18a, 18b |

## Patentansprüche

1. Verfahren zur Herstellung eines Plattenwärmetauschers mit zumindest zwei Wärmetauscherblöcken (10a, 10b), die separat voneinander in einem Lötofen gefertigt werden, wobei jeder Wärmetauscherblock (10a, 10b) mehrere parallel zueinander angeordnete Trennbleche (4) aufweist, die eine Vielzahl von Wärmeaustauschpassagen (1) für am Wärmetausch beteiligte Fluide bilden, **dadurch gekennzeichnet, dass,** nachfolgend zur separaten Fertigung der Wärmetauscherblöcke (10a, 10b) in dem Lötofen, zumindest ein mit Lot versehener Träger (11, 12, 15) zum Schmelzen des Lotes erwärmt wird, der zumindest eine Träger (11, 12, 15) zwischen gegenüberliegenden Außenflächen (14a, 14b) zu verbindender Wärmetauscherblöcke (10a, 10b) angeordnet wird und die zu verbindenden Wärmetauscherblöcke (10a, 10b) derart aufeinander oder aneinandergesetzt werden, dass der zumindest eine Träger (11, 12, 15) zwischen den gegenüberliegenden Außenflächen (14a, 14b) festgelegt wird.

2. Verfahren nach Anspruch 1, **dadurch gekennzeichnet, dass** der Träger (11, 12, 15) mit Metall hergestellt ist.

3. Verfahren nach Anspruch 1 oder 2, **dadurch gekennzeichnet, dass** der Träger ein Metallblech (15) ist.

4. Verfahren nach' Anspruch 1 oder 2, **dadurch gekennzeichnet, dass** der Träger oder die Träger aus einer Anordnung (11, 12) von Metalldrähten (111, 121) aufgebaut ist bzw. sind, insbesondere ein Drahtgitter bilden.

5. Verfahren nach einem der vorangehenden Ansprüche, **dadurch gekennzeichnet, dass** das Trägerlot, mit welchem der Träger versehen ist, einen niedrigeren Schmelzpunkt aufweist als das Bauteillot, mit welchem Bauteile innerhalb der Wärmetauscherblöcke (10a, 10b) verbunden sind.

6. Verfahren nach Anspruch 1 oder 2, **dadurch gekennzeichnet, dass** der Träger (11, 12, 15) eine Flächenausdehnung aufweist, die zumindest den zu verbindenden Außenflächen (14a, 14b) der Wärmetauscherblöcke (10a, 10b) entspricht.

7. Verfahren nach einem der vorangehenden Ansprüche, **dadurch gekennzeichnet, dass** der Träger eine Fläche aufweist, die einer Teilfläche der Außenflächen (14a, 14b) der Wärmetauscherblöcke (10a, 10b) entspricht, wobei mehrere Träger insbesondere in Form von Streifen nebeneinander angeordnet werden.

8. Verfahren nach einem der vorangehenden Ansprüche, **dadurch gekennzeichnet, dass** der Träger (11, 12, 15) auf einer Seite oder beiden Seiten mit Lot versehen ist.

9. Verfahren nach einem der vorangehenden Ansprüche, **dadurch gekennzeichnet, dass** auf den Träger eine Lotschicht lose aufgelegt oder aufgeklebt wird oder der Träger (11, 12, 15), insbesondere durch Plattieren, Tauchen oder Sprühen, mit dem Lot beschichtet wird.

10. Verfahren nach einem der vorangehenden Ansprüche, **dadurch gekennzeichnet, dass** die Wärmetauscherblöcke (10a, 10b) aufeinandergesetzt bzw aneinander gesetzt werden, sobald der Träger (11, 12, 15) die Schmelztemperatur des Lotes erreicht hat.

11. Verfahren nach einem der vorangehenden Ansprüche, **dadurch gekennzeichnet, dass** der Träger (11, 12, 15) durch Anlegen einer elektrischen Spannung oder durch ein Induktionsmittel, insbesondere eine Induktionsspule, erwärmt wird.

12. Verfahren nach einem der vorangehenden Ansprüche, **dadurch gekennzeichnet, dass** mindestens ein erster Träger (11) verwendet wird, der mehrere parallel in einer ersten Ebene zueinander angeordnete, erste lotbeschichteten Drahtstäbe (111) aufweist, und mindestens ein zweiter Träger (12), der ebenfalls mehrere parallel in einer zweiten Ebene zueinander angeordnete zweite, lotbeschichteten Drahtstäbe (121) aufweist, wobei der erste Träger (11) und der zweite Träger (12) derart zueinander angeordnet werden, dass die erste Ebene und die zweite Ebene parallel zueinander und die ersten Drahtstäbe (111) und die zweiten Drahtstäbe (121) winklig zueinander angeordnet sind, wobei die ersten Drahtstäbe (111) und zweiten Drahtstäbe (121) insbesondere einen Winkel von etwa 90° miteinander einschließen.

13. Plattenwärmetauscher (1) mit zumindest zwei Wärmetauscherblöcken (10a, 10b), wobei jeder Wärmetauscherblock (10a, 10b) mehrere parallel zueinander angeordnete Trennbleche (4) aufweist, die eine Vielzahl von Wärmeaustauschpassagen (1) für am Wärmetausch beteiligte Fluide bilden, und wobei die Wärmetauscherblöcke (10a, 10b) nach außen durch Deckbleche (5) begrenzt sind, **dadurch gekennzeichnet, dass** die Wärmetauscherblöcke (10a, 10b) zumindest einen gemeinsamen Header (17) zum Verteilen eines wärmeaustauschenden Fluids auf beide Wärmetauscherblöcke (10a, 10b) oder zum Abführen eines wärmeaustauschenden Fluids aus beiden Wärmetauscherblöcken (10a, 10b) aufweisen, wobei die Wärmetauscherblöcke (10a, 10b) jeweils an gegenüberliegenden Deckblechen (5) durch mindestens einen flachen Träger (11, 12, 15) verbunden sind, der über Lot mit den Deckblechen (5) der Wärmtauscherblöcke (10a, 10b) verbunden ist.

14. Plattenwärmetauscher (1) nach Anspruch 13, **dadurch gekennzeichnet, dass** die Deckbleche (5) eine größere Materialdicke aufweisen als die innerhalb der Wärmetauscherblöcke (10a, 10b) befindlichen Trennbleche (4).

15. Plattenwärmetauscher nach Anspruch 13 oder 14, **dadurch gekennzeichnet, dass** der oder die Träger (11,12, 15) die Deckbleche (5) der Wärmetauscherblöcke (10a, 10b) in etwa vollständig bedecken.

16. Plattenwärmetauscher nach einem der Ansprüche 13 bis 15, **dadurch gekennzeichnet, dass** sich mehrere, insbesondere zwei bis vier, parallel zueinander angeordnete Träger (11,12, 15), insbesondere in Form von ebenen Metallblechen (15), zwischen den Deckblechen (5) befinden.

17. Plattenwärmetauscher nach einem der Ansprüche 13 bis 16, **dadurch gekennzeichnet, dass** in den Wärmetauscherpassagen (1) der Wärmetauscherblöcke (10a, 10b) Mittel (3) zur Unterteilung der Wärmeaustauschpassagen (1) in eine Vielzahl von Kanälen, insbesondere gewellte Bleche (3), angeordnet sind.

## Claims

1. Method for producing a plate heat exchanger with at least two heat exchanger blocks (10a, 10b), which are produced separately from one another in a brazing furnace, each heat exchanger block (10a, 10b) having multiple parting sheets (4), which are arranged parallel to one another and form a multiplicity of heat exchange passages (1) for fluids involved in the heat exchange, **characterized in that** subsequently to the separate production of the heat exchanger blocks (10a, 10b) in the brazing furnace: at least one support (11, 12, 15) provided with brazing solder is heated to melt the solder, the at least one support (11, 12, 15) is arranged between opposing outer surfaces (14a, 14b) of heat exchanger blocks (10a, 10b) to be connected, and the heat exchanger blocks (10a, 10b) to be connected are placed one on top of the other or one against the other in such a way that the at least one support (11, 12, 15) is secured between the opposing outer surfaces (14a, 14b).

2. Method according to Claim 1, **characterized in that** the support (11, 12, 15) is produced with metal.

3. Method according to Claim 1 or 2, **characterized in that** the support is a metal sheet (15).

4. Method according to Claim 1 or 2, **characterized in that** the support or the supports is or are constructed from an arrangement (11, 12) of metal wires (111, 121), in particular form a wire grid.

5. Method according to one of the preceding claims, **characterized in that** the support solder, with which the support is provided, has a lower melting point than the component solder, by which components within the heat exchanger blocks (10a, 10b) are connected.

6. Method according to Claim 1 or 2, **characterized in that** the support (11, 12, 15) has an area extent that corresponds at least to the outer surfaces (14a, 14b) to be connected of the heat exchanger blocks (10a, 10b).

7. Method according to one of the preceding claims, **characterized in that** the support has a surface area that corresponds to a partial area of the outer surfaces (14a, 14b) of the heat exchanger blocks (10a, 10b), multiple supports, in particular in the form of strips, being arranged next to one another.

8. Method according to one of the preceding claims, **characterized in that** the support (11, 12, 15) is provided with brazing solder on one side or both sides.

9. Method according to one of the preceding claims, **characterized in that** a solder layer is loosely placed or adhesively attached onto the support or the support (11, 12, 15) is coated with the solder, in particular by cladding, dipping or spraying.

10. Method according to one of the preceding claims, **characterized in that** the heat exchanger blocks (10a, 10b) are placed one on top of the other or one against the other as soon as the support (11, 12, 15) has reached the melting temperature of the brazing solder.

11. Method according to one of the preceding claims, **characterized in that** the support (11, 12, 15) is heated by applying an electrical voltage or by an induction means, in particular an induction coil.

12. Method according to one of the preceding claims, **characterized in that** at least one first support (11), which has multiple first solder-coated wire rods (111) arranged parallel to one another in a first plane, and at least one second support (12), which likewise has multiple second solder-coated wire rods (121) arranged parallel to one another in a second plane, are used, the first support (11) and the second support (12) being arranged in relation to one another in such a way that the first plane and the second plane are arranged parallel to one another and the first wire rods (111) and the second wire rods (121) are arranged at an angle to one another, the first wire rods (111) and second wire rods (121) in particular forming with one another an included angle of approximately 90°.

13. Plate heat exchanger (1) with at least two heat exchanger blocks (10a, 10b), each heat exchanger block (10a, 10b) having multiple parting sheets (4), which are arranged parallel to one another and form a multiplicity of heat exchange passages (1) for fluids involved in the heat exchange, and the heat exchanger blocks (10a, 10b) being outwardly delimited by cover sheets (5), **characterized in that** the heat exchanger blocks (10a, 10b) have at least one common header (17) for distributing a heat-exchanging fluid to the two heat exchanger blocks (10a, 10b) or for discharging a heat-exchanging fluid from the two heat exchanger blocks (10a, 10b), the heat exchanger blocks (10a, 10b) being respectively connected at opposing cover sheets (5) by at least one flat support (11, 12, 15), which is connected to the cover sheets (5) of the heat exchanger blocks (10a, 10b) by brazing solder.

14. Plate heat exchanger (1) according to Claim 13, **characterized in that** the cover sheets (5) have a greater material thickness than the parting sheets (4) located within the heat exchanger blocks (10a, 10b) .

15. Plate heat exchanger according to Claim 13 or 14, **characterized in that** the support or supports (11, 12, 15) cover (s) the cover sheets (5) of the heat exchanger blocks (10a, 10b) more or less completely.

16. Plate heat exchanger according to one of Claims 13 to 15, **characterized in that** multiple, in particular two to four, supports (11, 12, 15) arranged parallel to one another, in particular in the form of planar metal sheets (15), are located between the cover sheets (5).

17. Plate heat exchanger according to one of Claims 13 to 16, **characterized in that** means (3) for dividing the heat exchange passages (1) into a multiplicity of channels, in particular corrugated sheets (3), are arranged in the heat exchange passages (1) of the heat exchanger blocks (10a, 10b).

## Revendications

1. Procédé de fabrication d'un échangeur de chaleur à plaques comprenant au moins deux blocs d'échangeur de chaleur (10a, 10b) qui sont fabriqués séparément les uns des autres dans un four à braser, dans lequel chaque bloc d'échangeur de chaleur (10a, 10b) comprend plusieurs tôles de séparation (4) disposées parallèlement les unes aux autres, lesquelles forment une pluralité de passages d'échange de chaleur (1) pour des fluides participant à l'échange de chaleur, **caractérisé en ce qu'**après la fabrication séparée des blocs d'échangeur de chaleur (10a, 10b) dans le four à braser, au moins un support (11, 12, 15) doté de métal d'apport de brasage est chauffé pour faire fondre le métal d'apport de brasage, ledit au moins un support (11, 12, 15) est disposé entre des surfaces extérieures (14a, 14b) en regard de blocs d'échangeur de chaleur (10a, 10b) à relier et les blocs d'échangeur de chaleur (10a, 10b) à relier sont placés l'un sur l'autre ou l'un contre l'autre de telle sorte que ledit au moins un support (11, 12, 15) soit fixé entre les surfaces extérieures (14a, 14b) en regard.

2. Procédé selon la revendication 1, **caractérisé en ce que** le support (11, 12, 15) est fabriqué avec du métal.

3. Procédé selon la revendication 1 ou 2, **caractérisé en ce que** le support est une tôle métallique (15).

4. Procédé selon la revendication 1 ou 2, **caractérisé en ce que** le support ou les supports est ou sont conçus à partir d'un agencement (11, 12) de fils métalliques (111, 121), en particulier à partir d'une grille métallique.

5. Procédé selon l'une des revendications précédentes, **caractérisé en ce que** le métal d'apport de brasage de support duquel le support est pourvu présente un point de fusion inférieur à celui du métal d'apport de brasage de composant à l'aide duquel des composants à l'intérieur des blocs d'échangeur de chaleur (10a, 10b) sont reliés.

6. Procédé selon la revendication 1 ou 2, **caractérisé en ce que** le support (11, 12, 15) présente une superficie qui correspond au moins aux surfaces extérieures (14a, 14b) à relier des blocs d'échangeur de chaleur (10a, 10b) .

7. Procédé selon l'une des revendications précédentes, **caractérisé en ce que** le support présente une surface qui correspond à une surface partielle des surfaces extérieures (14a, 14b) des blocs d'échangeur de chaleur (10a, 10b), plusieurs supports étant juxtaposés en particulier sous forme de bandes.

8. Procédé selon l'une des revendications précédentes, **caractérisé en ce que** le support (11, 12, 15) est doté de métal d'apport de brasage sur un côté ou sur les deux côtés.

9. Procédé selon l'une des revendications précédentes, **caractérisé en ce qu'**une couche de métal d'apport de brasage est placée de manière lâche ou collée sur le support, ou le support (11, 12, 15) est revêtu du métal d'apport de brasage en particulier par placage, immersion ou pulvérisation.

10. Procédé selon l'une des revendications précédentes, **caractérisé en ce que** les blocs d'échangeur de chaleur (10a, 10b) sont placés les uns sur les autres ou les uns contre les autres dès que le support (11, 12, 15) a atteint la température de fusion du métal d'apport de brasage.

11. Procédé selon l'une des revendications précédentes, **caractérisé en ce que** le support (11, 12, 15) est chauffé par application d'une tension électrique ou par un moyen d'induction, en particulier une bobine d'induction.

12. Procédé selon l'une des revendications précédentes, **caractérisé en ce qu'**au moins un premier support (11) est utilisé, lequel comprend plusieurs premières barres de fil métallique (111) revêtues de métal d'apport de brasage et disposées parallèlement les unes aux autres dans un premier plan, et au moins un deuxième support (12) qui comprend également plusieurs deuxièmes barres de fil métallique (121) revêtues de métal d'apport de brasage et disposées parallèlement les unes aux autres dans un deuxième plan, le premier support (11) et le deuxième support (12) étant disposés l'un par rapport à l'autre de telle sorte que le premier plan et le deuxième plan soient disposés parallèlement l'un à l'autre et que les premières barres de fil métallique (111) et les deuxièmes barres de fil métallique (121) soient disposées de manière inclinée les unes par rapport aux autres, les premières barres de fil métallique (111) et les deuxièmes barres de fil métallique (121) formant en particulier un angle d'environ 90° les unes par rapport aux autres.

13. Échangeur de chaleur à plaques (1) comprenant au moins deux blocs d'échangeur de chaleur (10a, 10b), dans lequel chaque bloc d'échangeur de chaleur (10a, 10b) comprend plusieurs tôles de séparation (4) disposées parallèlement les unes aux autres, lesquelles forment une pluralité de passages d'échange de chaleur (1) pour des fluides participant à l'échange de chaleur, et dans lequel les blocs d'échangeur de chaleur (10a, 10b) sont limités vers l'extérieur par des tôles de recouvrement (5), **caractérisé en ce que** les blocs d'échangeur de chaleur (10a, 10b) comprennent au moins un collecteur commun (17) pour répartir un fluide d'échange de chaleur sur les deux blocs d'échangeur de chaleur (10a, 10b) ou pour évacuer un fluide d'échange de chaleur hors des deux blocs d'échangeur de chaleur (10a, 10b), les blocs d'échangeur de chaleur (10a, 10b) étant reliés respectivement par au moins un support plan (11, 12, 15) au niveau de tôles de recouvrement (5) opposées, lequel support plan est relié aux tôles de recouvrement (5) des blocs d'échangeur de chaleur (10a, 10b) par le biais d'un métal d'apport de brasage.

14. Échangeur de chaleur à plaques (1) selon la revendication 13, **caractérisé en ce que** les tôles de recouvrement (5) présentent une épaisseur de matériau supérieure à celle des tôles de séparation (4) se trouvant à l'intérieur des blocs d'échangeur de chaleur (10a, 10b).

15. Échangeur de chaleur à plaques selon la revendication 13 ou 14, **caractérisé en ce que** le ou les supports (11, 12, 15) recouvrent approximativement complètement les tôles de recouvrement (5) des blocs d'échangeur de chaleur (10a, 10b).

16. Échangeur de chaleur à plaques selon l'une des revendications 13 à 15, **caractérisé en ce que** plusieurs, en particulier deux à quatre supports (11, 12, 15) disposés parallèlement les uns aux autres, en particulier sous forme de tôles métalliques planes (15), se trouvent entre les tôles de recouvrement (5).

17. Échangeur de chaleur à plaques selon l'une des revendications 13 à 16, **caractérisé en ce que** des moyens (3) permettant de diviser les passages d'échange de chaleur (1) en une pluralité de canaux, en particulier des tôles ondulées (3), sont disposés dans les passages d'échange de chaleur (1) des blocs d'échangeur de chaleur (10a, 10b).
